# EUROPEAN PATENT SPECIFICATION

(11) **EP 2 645 625 B1**
(45) Date of publication and mention of the grant of the patent: **26.07.2017**
(21) Application number: 12199512.0
(22) Date of filing: 27.12.2012
(51) Int. Cl.: H04L 12/24, G06F 9/50

(54) **Computer system and subsystem management method**
Computersystem und Subsystemverwaltungsverfahren
Système informatique et procédé de gestion du sous-système

(30) Priority: 28.03.2012 JP 2012074203
(43) Date of publication of application: 02.10.2013
(73) Proprietor: Hitachi, Ltd., Tokyo 100-8280 (JP)
(72) Inventor: Yamada, Masaki, Tokyo, 100-8220 (JP); Ogata, Yuji, Tokyo, 100-8220 (JP); Hayakawa, Hitoshi, Tokyo, 100-8220 (JP); Tsushima, Yuji, Tokyo, 100-8220 (JP)
(74) Representative: MERH-IP Matias Erny Reichl Hoffmann Patentanwälte PartG mbB

(56) References cited:
- WO-A1-02/080458
- WO-A1-2008/058570
- US-A1- 2004 103 211
- US-A1- 2005 120 105
- US-A1- 2012 239 739
- TENHUNEN J ET AL: "Stability-based multi-hop clustering protocol", 2005 IEEE 16TH INTERNATIONAL SYMPOSIUM ON PERSONAL, INDOOR AND MOBILE RADIO COMMUNICATIONS (IEEE CAT. NO. 05TH8889) IEEE PISCATAWAY, NJ, USA, vol. 2, 2005, page 958, XP002706056, ISBN: 978-3-8007-2909-8

## Description

### CLAIM OF PRIORITY

The present application claims priority from Japanese patent application JP 2012-74203 filed on March 28, 2012, the content of which is hereby incorporated by reference into this application.

### BACKGROUND OF THE INVENTION

This invention relates to a computer system for providing a service via a network, and more particularly, to a method and system for managing subsystems (data centers) which are distributed in a plurality of locations on a group-by-group basis.

There has been known cloud computing as one of the trends in recent years. In the cloud computing, a plurality of subsystems such as data centers (hereinafter referred to as DCs) which are geographically scattered are coupled via a network, and a virtualization technology is used to realize an efficient provision of a service.

Various methods have been conceived as a management method for the computer resources such as the DC in the cloud computing. See, for example, Japanese Patent Application Laid-open No. 2006-189971.

Japanese Patent Application Laid-open No. 2006-189971 describes that in order to build a cloud via a network, based on various attributes assigned to respective DCs constituting the cloud, a group is built or the group is restructured. In this case, a location of a data center, a type of computer resource of the data center, and the like are assigned as the attribute. In this technology, modeling is performed based on those attributes, and then grouping, hierarchization, parallelization, and the like are performed.

On the other hand, there is known a distributed cloud technology in which when a cloud is built, instead of large-scale facilities such as DCs, micro DCs, which are each a smaller unit than the DCs, are used.

In the distributed cloud technology, existing information and communication technology (ICT) facilities, an intelligent node, a network device having a routing function are used to build the micro DC. A distributed cloud system aims to manage small-scale computer resources existing on a network and to provide a plurality of users with a service by using those computer resources.

The distributed cloud system assumes the use of a hierarchical management configuration for managing the micro DCs. Specifically, a lower management node manages the individual micro DCs, and an upper management node monitors the overall system. This configuration enables, as compared with a conventional cloud computing, a larger number of small-scale ICT facilities to be incorporated into the cloud.

As examples of conventional methods for realizing management of a network system by grouping, the technologies described in International Patent WO01/057685 and Japanese Patent Application Laid-open No. 2011-186609 are known, for example.

International Patent WO01/057685 describes the management method which uses the candidacy system by self-evaluation in order to automatically build the hierarchical management configuration. Japanese Patent Application Laid-open No. 2011-186609 describes that the representative server is selected from the group as the majority, to thereby build the hierarchical management configuration.

Meanwhile, in the distributed cloud system, a communication bandwidth, delay time, and the like between the micro DCs affect a service quality. It is therefore necessary to build and manage a group in consideration of a network quality.

Patent application WO 2008/058570 A1 discloses a node supporting networking and communication with other nodes by means of a layered communication protocol and group communication with other nodes controlled via a grouping protocol adapted to interact with said communication protocol. The node comprises a policy engine which is arranged separately from, but in communication with said grouping protocol. The policy engine is adapted to establish current and/or changing node, group and network related information and to use one or more grouping policies to automatically and dynamically control grouping related actions and adapt the grouping. WO 2008/058570 A1 further discloses a system comprising a number of such nodes and a method of controlling grouping.

From patent application WO 02/080458 A1 a method for configuring a network is known, wherein the network comprises a plurality of network sections, the method comprising the steps of accessing data from network sections, forming groups of network sections using a clustering method by using at least part of the accessed data as input data, and processing parameter on network section group level.

Patent application US 2005/120105 A1 discloses a method of clustering communication nodes based on network attributes such as network delays and forwarding capacity, on communication interest attributes, and on application attributes such as quality of service preferences/constraints in providing communications between users and application servers. A multi-attribute communication feature vector is formed. That vector is comprised of network attributes, communication interests attributes and quality of service requirements. Then the multi-attribute communication feature vectors are clustered. The clustering methods for multi-type attribute feature vectors are: iterative clustering using a generalized distance space with normalized attribute subspace metrics, fusion clustering, and nested clustering.

In patent application US 2004/103211 A1 a system and method are disclosed for monitoring traffic in an enterprise network. Similar hosts may be grouped using flow information. Network policy may then be created at the group level based on the signatures of the hosts and groups of hosts in the enterprise. Hosts may be arranged in hierarchical clusters. Some of these clusters may be selected as groups based on a desired degree of similarity between hosts in a group. The similarity between hosts may be determined based on similarity or network behavior of the hosts.

### SUMMARY OF THE INVENTION

In the technology described in Japanese Patent Application Laid-open No. 2006-189971, which is the method involving building a group by using the attribute assigned to the DC, the group is not built in consideration of the network quality.

In a case where a group is built by using the micro DCs, parameters indicating the network quality, such as a response time and network bandwidth between the micro DCs, are important for building the group.

The above-mentioned parameters, however, vary frequently when new ICT facilities are added or when a traffic amount of a network increases or decreases, and hence fixed attributes cannot be used for managing the group and a state of the network needs to be monitored. Therefore, with the conventional methods, a group cannot be built in consideration of the network state, and the group cannot be rebuilt based on the network state.

In view of the above, the present invention provides a computer system and a subsystem management method having the features of the respective independent claims. Preferred embodiments of the invention are described in the dependent claims.

The present invention can be appreciated by the description which follows in conjunction with the following figures. According to an aspect, a computer system comprises a plurality of subsystems coupled via a network. Each of the plurality or subsystems comprises at least one computer and at least one network device. The at least one computer includes a first processor, a first memory coupled to the first processor, and a first network interface for communicating to/from another device. The at least one network device includes a second processor, a second memory coupled to the second processor, and a second network interface for communicating to/from another device. The computer system comprises a subsystem control module for managing the plurality of subsystems. The subsystem control module being configured to: select at least one subsystem as a group management node from among the plurality of subsystems, in a case of receiving a build request for a group which is used for providing a service and which includes at least one subsystem; command the at least one subsystem selected as the group management node to measure a network quality between the group management node and each of the plurality of subsystems other than the group management node; receive a measurement result of the network quality; determine, based on the received measurement result of the network quality, a configuration of the group; and transmit to the group management node a group build command including information on the determined configuration of the group.

According to the exemplary embodiment of this invention, the group of the subsystems (data centers) can be built in consideration of the network quality which changes every moment, and the states of the subsystems (data centers) can be managed in a hierarchical manner.

### BRIEF DESCRIPTION OF THE DRAWINGS

The present invention can be appreciated by the description which follows in conjunction with the following figures, wherein:
FIG. 1 is a block diagram illustrating a configuration example of an elements of a data center system according to an embodiment of this invention;
FIG. 2 is an explanatory diagram illustrating a brief overview of how the data center system is managed in the embodiment of this invention;
FIG. 3 is a block diagram illustrating a configuration example of a micro DC according to the embodiment of this invention;
FIGS. 4 and 5 are block diagrams illustrating configurations of a gateway according to the embodiment of this invention;
FIG. 6 is an explanatory diagram illustrating an example of a micro DC management table according to the embodiment of this invention;
FIG. 7 is an explanatory diagram illustrating an example of a group management table according to the embodiment of this invention;
FIG. 8 is an explanatory diagram illustrating an example of a service management table according to the embodiment of this invention;
FIG. 9 is an explanatory diagram illustrating an example of a group member management table according to the embodiment of this invention;
FIG. 10 is an explanatory diagram illustrating an example of a service management table according to the embodiment of this invention;
FIG. 11 is a flowchart illustrating processing executed by a management node according to the embodiment of this invention;
FIG. 12 is a flowchart illustrating processing executed by the micro management node according to the embodiment of this invention; and
FIGS. 13A and 13B are flowcharts illustrating processing executed by the management node 10 in a case where a new micro DC is added according to the embodiment of this invention.

### DETAILED DESCRIPTION OF THE PREFERRED EMBODIMENT

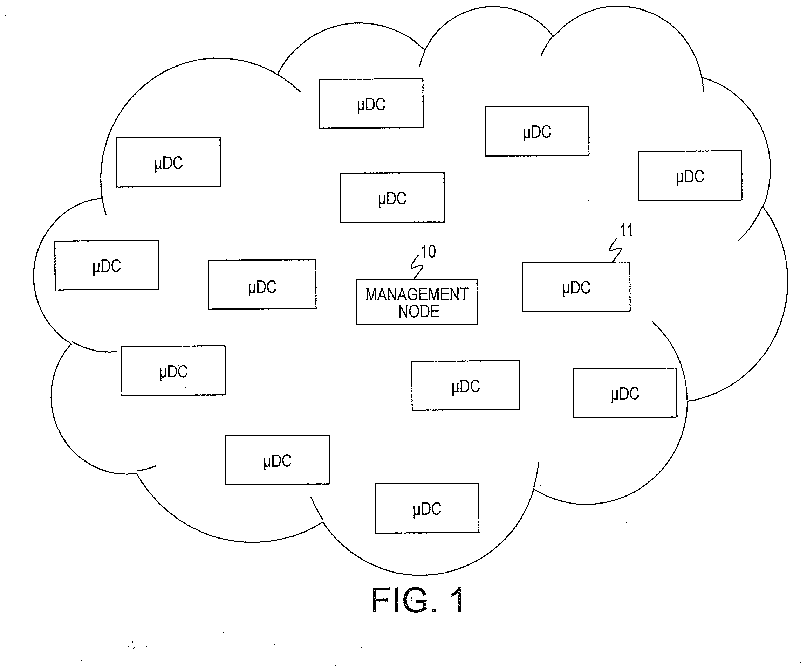

FIG. 1 is a block diagram illustrating a configuration example of the elements of a data center system according to an embodiment of this invention.

The data center system according to this embodiment includes a plurality of nodes (subsystems). The nodes are coupled to one another via a network. As the network, for example, a WAN and a LAN are conceivable, but this invention is not limited by a type of network.

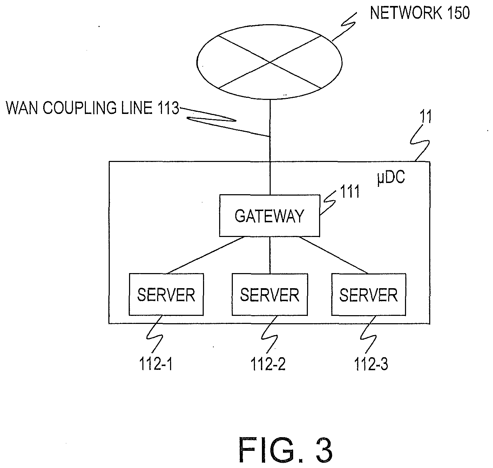

In this embodiment, we call each of the nodes as a micro DC. Further, the plurality of nodes include a single management node 10 and plural nodes 11. In this case, the micro DC is a computer system consisted by one or more servers 112-1 to 112-3 (hereinafter collectively referred to as server 112) illustrated in FIG. 3, an intelligent node, a network device, and a storage device. The micro DC provides computing resource in cloud computing.

The management node 10 is in charge of the whole data center system including all nodes 11. Node 11 is a computer system which provides computing resource for the data center system.

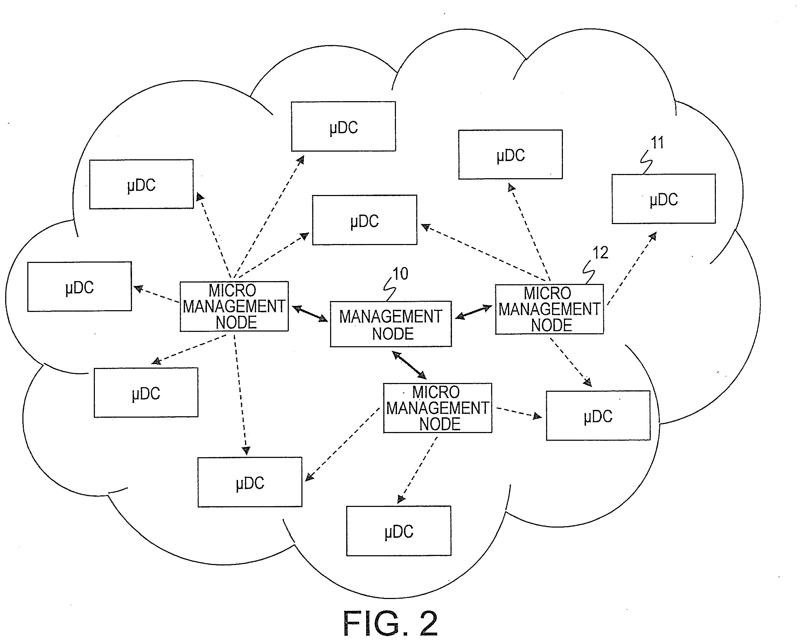

FIG. 2 is an explanatory diagram illustrating a brief overview of how the data center system is managed in the embodiment of this invention.

In this invention, the management node 10 selects one or more micro management nodes 12 from among the nodes (micro DCs) 11. The selected micro management node 12 then measures the network quality between the micro management node 12 it self and one or more of the nodes (micro DCs) 11. The micro management node 12 transmits the measurement result of the network quality between the micro management node 12 and nodes (micro DCs) 11 to the management node 10. Management node 10 determines the group configuration of the nodes (micro DCs) 11 based on the received measurement result. One micro management node 12 will belong to each of the groups, and will begin to handle part of the management of the group.

After the groups are determined, the micro management node 12 keeps on monitoring the network quality between the micro management node 12 and each of the nodes (micro DCs) 11 belonging to the same group with the micro management node 12. The micro management node 12 also monitors the running state of each node, and transmits the monitoring results to the management node 10. In this manner, the management node 10 can monitor the nodes (micro DCs) 11 on a group-by-group basis. For example, based on the monitoring result, the management node 10 can detect a deterioration of the network according to the monitoring results of the network quality. The management node 10 may change the group configuration.

As a method of changing the group configuration, for example, deleting the node (micro DC) 11 from a group, changing the group to which the node (micro DC) 11 belongs, adding a new node (micro DC) 11 to the group, and other such methods are conceivable.

As described above, the micro management node 12 monitors the running state of each of the nodes 11, and the network quality between the micro management node 12 it self and the node 11 on a node-by-node basis. The management node 10 monitors the running state of the node 11 and the network quality between the management node 10 and the node 11 on a group-by-group basis.

FIG. 3 is a block diagram illustrating a configuration example of the micro DC 11 according to the embodiment of this invention. In FIG. 3, a description is given by taking the micro DC 11 as an example, but the management node 10 has the same configuration.

The micro DC 11 includes a gateway 111 and the server 112. It should be noted that the micro DC 11 may include other devices such as a storage device.

The server 112 is a computer for providing a predetermined service. The server 112 has a computer resource such as a CPU (not shown), a memory (not shown), and an I/O device (not shown). In this embodiment, a virtualization technology is applied to the server 112 so that at least one virtual computer to which the computer resource is allocated runs on the server 112.

The gateway 111 couples the micro DC 11 to a network 150. For example, in a case where the network 150 is a WAN, the gateway 111 is coupled to the WAN (network 150) via a WAN coupling line 113. The gateway 111 also has, in addition to a switching function of coupling other device and the server 112, a management function of managing the micro DC 11.

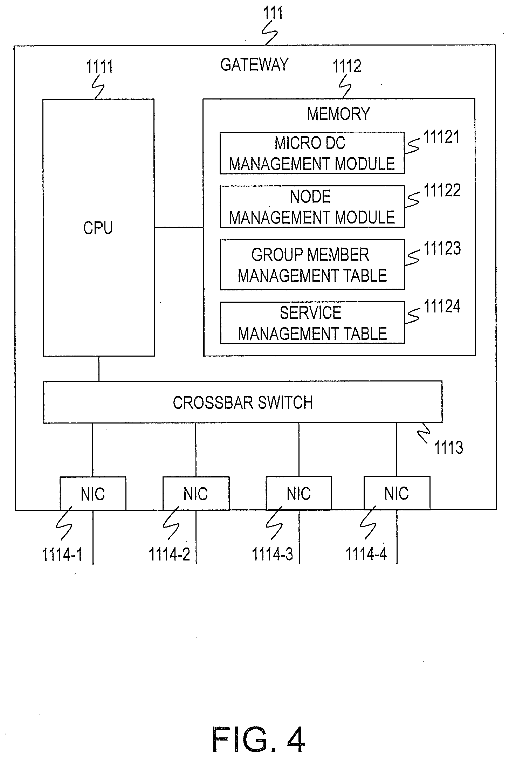

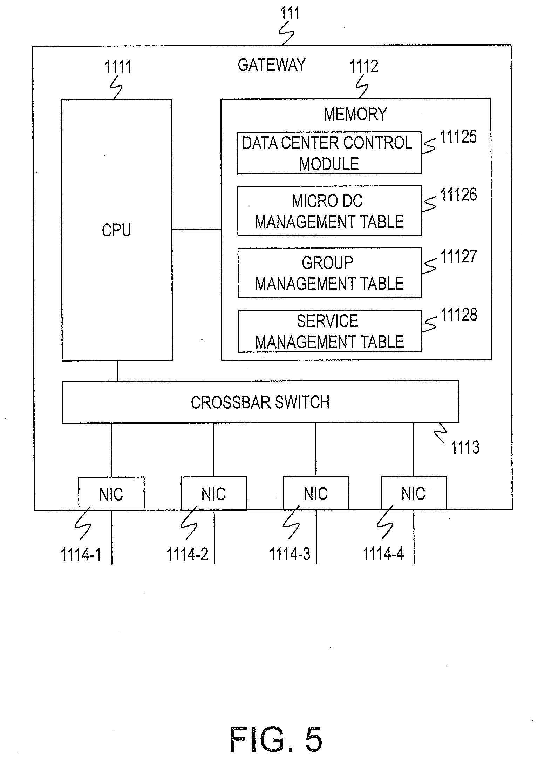

FIGS. 4 and 5 are block diagrams illustrating configurations of the gateway 111 according to the embodiment of this invention. FIG. 4 illustrates a configuration of the gateway 111 included in a normal micro DC 11. FIG. 5 illustrates a configuration of the gateway 111 included in the micro DC 11 serving as the management node 10.

First, the configuration of the gateway 111 included in the normal micro DC 11 is described.

The gateway 111 includes a CPU 1111, a memory 1112, a crossbar switch 1113, and a plurality of network interfaces (NICs) 1114-1 to 1114-4 (hereinafter collectively referred to as NIC 1114).

The CPU 1111 executes a program stored in the memory 1112. The CPU 1111 executes the program, to thereby realize functions which the gateway 111 has.

The memory 1112 stores a program to be executed by the CPU 1111 and information necessary for executing the program. The program and information stored in the memory 1112 are described later.

The crossbar switch 1113 switches a connection to the NICs 1114, to thereby transfer a packet to a predetermined destination. The NIC 1114 is an interface for coupling the gateway 111 to the network 150.

In a case of receiving a packet via the NIC 1114, the gateway 111 transfers the packet to the CPU 1111 via the crossbar switch 1113. The CPU 1111 analyzes the packet, refers to network information and the like stored in the memory 1112, solves a destination of the received packet, and transfers the packet to a predetermined NIC 1114 via the crossbar switch 1113.

In this embodiment, the memory 1112 stores, in addition to a program and information for realizing a function as the gateway, programs for realizing a micro DC management module 11121 and a node management module 11122. The memory 1112 also stores a group member management table 11123 and a service management table 11124. It should be noted that the memory 1112 may store other types of program and information.

The micro DC management module 11121 collects a load and running state of the server 112 within the micro DC 11, and manages a state of the computer resource within the micro DC 11.

Specifically, the micro DC management module 11121 generates a packet for communicating to/from the server 112 within the micro DC 11, and transmits the generated packet to the server 112 via the crossbar switch 1113 and the NIC 1114. In a case of receiving from the server 112 a packet which contains information indicating the load and running state of the server 112, the micro DC management module 11121 stores the information in the respective management tables.

The micro DC management module 11121 also manages, for example, a status of a service provided as the micro DC 11 and allocation of the computer resource.

The node management module 11122 has a function of communicating to/from another micro DC 11 via the network and a function for operating as the micro management node 12.

The node management module 11122 transmits/receives a packet having time information assigned thereto to/from the micro DC 11, to thereby measure the network quality such as a round-trip time (RTT) and a fluctuation of time synchronization for each micro DC 11.

Further, the node management module 11122 transmits to the micro management node 12 the measurement result of the network quality between the own micro DC 11 and the micro DC 11, the information on the load and running state of the server 112 within each micro DC 11, information on the providing status of the service in each micro DC 11, and the like.

In a case where selected as the micro management node 12, the node management module 11122 records in the respective management tables the measurement result of the network quality, the information on the providing status of the service, and the like which are received from other micro DCs 11, and transmits the recorded information to the management node 10.

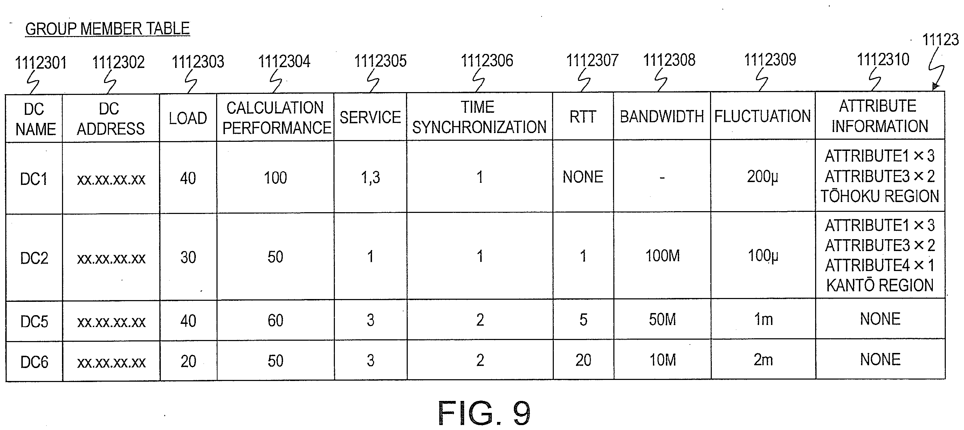

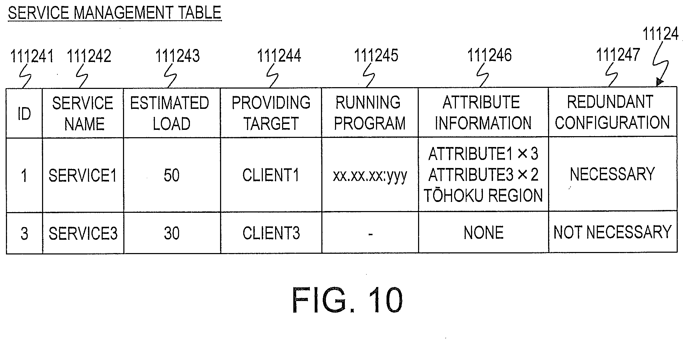

The group member management table 11123 stores information on the micro DCs 11 included in a group which the own micro DC 11 monitors as the micro management node 12. Details of the group member management table 11123 are described later referring to FIG. 9. The service management table 11124 stores information on a service provided within the group. Details of the service management table 11124 are described later referring to FIG. 10.

Next, the configuration of the gateway 111 included in the management node 10 is described.

A hardware configuration of the gateway 111 included in the management node 10 is the same as that of the gateway 111 included in the node 11, and hence a description thereof is omitted. The gateway 111 included in the management node 10 is different in that a data center control module 11125 is stored in the memory 1112. It should be noted that the micro DC management module 11121 and the node management module 11122 may be stored in the memory 1112.

The data center control module 11125 selects the micro management node 12, and determines the group configuration based on the information transmitted from the micro management node 12 on the network quality between the micro management node 12 and the micro DC 11. Further, the data center control module 11125 changes the group configuration based on the information transmitted from the micro management node 12 on the network quality between the micro management node 12 and each of the micro DCs 11 included in the group.

The data center control module 11125 includes a micro DC management table 11126, a group management table 11127, and a service management table 11128.

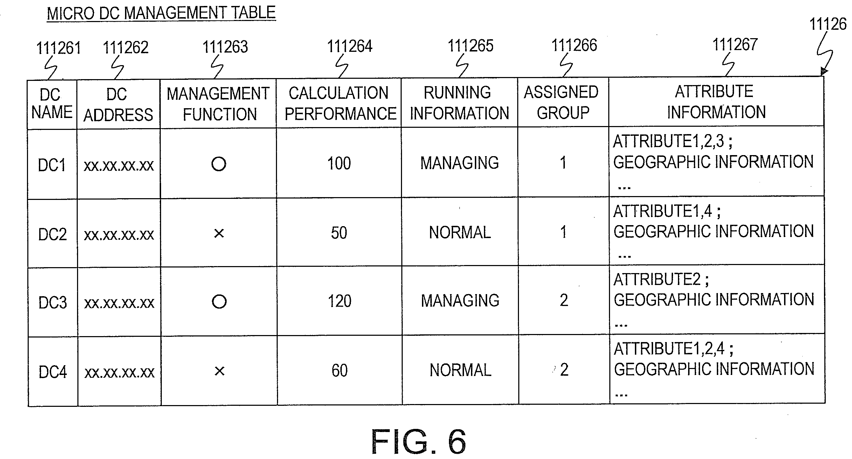

The micro DC management table 11126 stores information on the micro DCs 11 included in the data center system. Details of the micro DC management table 11126 are described later referring to FIG. 6.

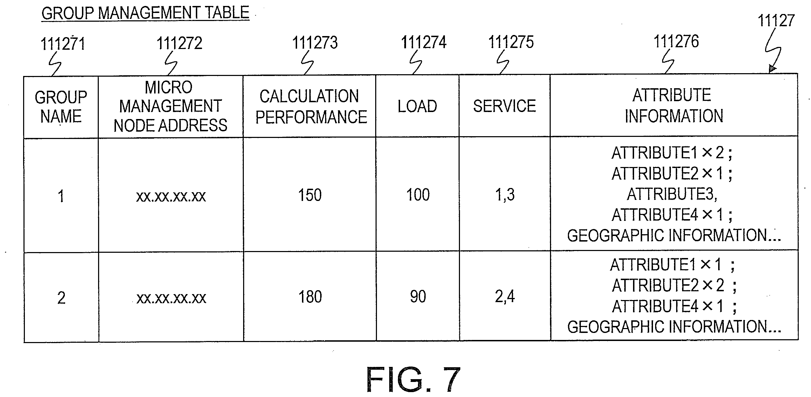

The group management table 11127 stores information on the group. Details of the group management table 11127 are described later referring to FIG. 7.

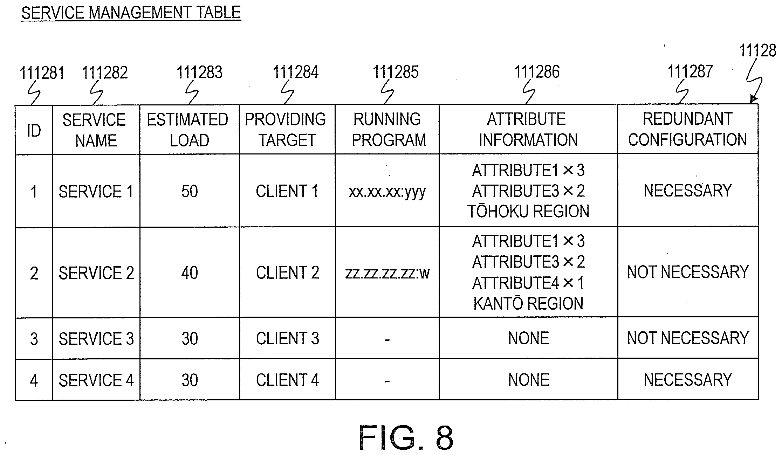

The service management table 11128 stores information on a service provided by using the data center system. Details of the service management table 11128 are described later referring to FIG. 8.

It should be noted that functions of the micro DC management module 11121, the node management module 11122, and the data center control module 11125 may be realized by using dedicated hardware. Further, the management node 10 does not need to be the gateway 111 included in the micro DC 11, and may be a computer or network device including the data center control module 11125.

FIG. 6 is an explanatory diagram illustrating an example of the micro DC management table 11126 according to the embodiment of this invention.

The micro DC management table 11126 includes a DC name 111261, a DC address 111262, a management function 111263, a calculation performance 111264, running information 111265, an assigned group 111266, and attribute information 111267.

The DC name 111261 stores an identifier of the micro DC 11 as a management target.

The DC address 111262 stores an address of the micro DC 11. In this embodiment, an address of the gateway 111 included in the micro DC 11 is stored.

The management function 111263 stores information indicating whether or not the micro DC 11 includes the node management module 11122.

The calculation performance 111264 stores a value indicating a performance of calculation processing in the micro DC 11 corresponding to the DC name 111261. As the performance of calculation processing, for example, a performance of the computer resource, a network bandwidth, and the number of users to which a service can be provided are conceivable.

It should be noted that the performance of calculation processing is a value determined in a case where the micro DCs 11 are configured. However, for example, when the configuration of the micro DC 11 is changed, the value is changed. In this case, the micro DC 11 notifies the management node 10 or the micro management node 12 of the changed value.

The running information 111265 stores information indicating a running state of the micro DC 11 corresponding to the DC name 111261. Specifically, in a case where the micro DC 11 operates as the normal micro DC 11, a value "NORMAL" is stored, and in a case where the micro DC 11 operates as the micro management node 12, a value "MANAGING" is stored.

The assigned group 111266 stores an identifier of a group to which the micro DC 11 corresponding to the DC name 111261 belongs.

The attribute information 111267 stores various kinds of attribute information which the micro DC 11 corresponding to the DC name 111261 has. As the attribute information, for example, geographic information, information indicating whether or not the micro DC 11 includes a storage system, and information indicating whether or not the micro DC 11 has a specific function are conceivable.

FIG. 7 is an explanatory diagram illustrating an example of the group management table 11127 according to the embodiment of this invention.

The group management table 11127 includes a group name 111271, a micro management node address 111272, a calculation performance 111273, a load 111274, a service 111275, and attribute information 111276.

The group name 111271 stores an identifier of a group.

The micro management node address 111272 stores an address of the micro management node 12 which manages the group corresponding to the group name 111271. In this embodiment, an address of the gateway 111 is stored.

The calculation performance 111273 stores a numerical value indicating a performance of calculation processing of the group corresponding to the group name 111271. In the calculation performance 111273, a total value of the values of the performance of calculation processing (calculation performance 111264) of all the micro DCs 11 included in the group is stored.

The load 111274 stores information indicating a current load in the group corresponding to the group name 111271. For example, a usage amount or usage rate of the computer resource, or a usage amount or usage rate of the network bandwidth is stored. The information is information periodically transmitted from each micro management node 12.

The service 111275 stores identification information for the service provided to the group corresponding to the group name 111271.

The attribute information 111276 is the same as the attribute information 111267. It should be noted that in the attribute information 111276, information having a format obtained by performing statistical processing on the attribute information 111267 of all the micro DCs 11 included in the group is stored.

FIG. 8 is an explanatory diagram illustrating an example of the service management table 11128 according to the embodiment of this invention.

The service management table 11128 includes an ID 111281, a service name 111282, an estimated load 111283, a providing target 111284, a running program 111285, attribute information 111286, and a redundant configuration 111287.

The ID 111281 stores an identifier for uniquely identifying a service. The service name 111282 stores a name of the service.

The estimated load 111283 stores a value indicating a load to be imposed on the micro DC 11 or the group in a case where the service corresponding to the service name 111282 is provided. The value stored in the estimated load 111283 is set in advance for each service. It should be noted that above-mentioned value may be changed by an administrator.

The providing target 111284 stores identification information for a user to which the service is to be provided.

The running program 111285 stores an address from which the service is to be provided, in other words, an address of a port.

The attribute information 111286 stores attribute information necessary for the micro DC 11 or the group to provide the service corresponding to the service name 111282.

The redundant configuration 111287 stores information indicating whether or not a redundant configuration is necessary for providing the service. When the redundant configuration is necessary, a value "NECESSARY" is stored, and when the redundant configuration is not necessary, a value "NOT NECESSARY" is stored.

FIG. 9 is an explanatory diagram illustrating an example of the group member management table 11123 according to the embodiment of this invention.

The group member management table 11123 includes a DC name 1112301, a DC address 1112302, a load 1112303, a calculation performance 1112304, a service 1112305, time synchronization 1112306, an RTT 1112307, a bandwidth 1112308, a fluctuation 1112309, and attribute information 1112310.

The DC name 1112301, the DC address 1112302, the calculation performance 1112304, and the attribute information 1112310 are the same as the DC name 111261, the DC address 111262, the calculation performance 111264, and the attribute information 111267, respectively. Further, the load 1112303 is the same as the load 111274. The service 1112305 is the same as the ID 111281.

The time synchronization 1112306, the RTT 1112307, the bandwidth 1112308, and the fluctuation 1112309 are parameters indicating the network quality.

The time synchronization 1112306 stores information indicating a group for time synchronization.

The RTT 1112307 stores a round-trip time (RTT) between the micro management node 12 and the micro DC 11. The bandwidth 1112308 stores a bandwidth between the micro management node 12 and the micro DC 11. The fluctuation 1112309 stores a fluctuation of the RTT or a fluctuation at the time of the time synchronization.

FIG. 10 is an explanatory diagram illustrating an example of the service management table 11124 according to the embodiment of this invention.

The service management table 11124 includes an ID 111241, a service name 111242, an estimated load 111243, a providing target 111244, a running program 111245, attribute information 111246, a redundant configuration 111247.

The ID 111241, the service name 111242, the estimated load 111243, the providing target 111244, the running program 111245, the attribute information 111246, and the redundant configuration 111247 are the same as the ID 111281, the service name 111282, the estimated load 111283, the providing target 111284, the running program 111285, the attribute information 111286, and the redundant configuration 111287, respectively.

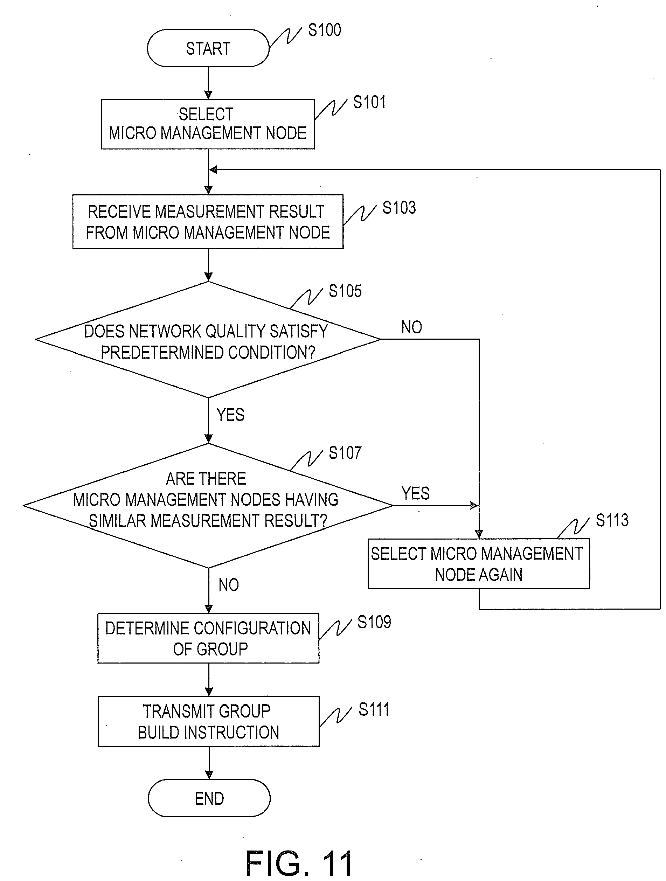

FIG. 11 is a flowchart illustrating processing executed by the management node 10 according to the embodiment of this invention.

In the following, a description is given by taking as an example a case where a group is built for the first time. Therefore, the assigned groups 111266 of all entries of the micro DC management table 11126 are blank, and the value "NORMAL" is stored in all the entries of the running information 111265. Further, the group management table 11127 remains blank. It should be noted that all the pieces of information are stored in the service management table 11128.

The management node 10 starts the processing in a case of receiving a start request for the processing (Step S100). It should be noted that the start request includes at least the number of groups to be built and an identifier of the group. Further, in this embodiment, a service to be provided is set in advance for each group to be built. Therefore, the start request also includes information obtained by associating the identifier of the group and an identifier of the service with one another.

The management node 10 updates the group management table 11127 based on the received start request. Specifically, the management node 10 generates as many entries as the number of groups to be built, stores the identifier of the group in the group name 111271 of the generated entry, and stores the identifier of the service in the service 111275.

The management node 10 first selects the micro management node 12 from among the micro DCs 11 (Step S101). Specifically, the following processing is executed.

The management node 10 refers to the management function 111263 of the micro DC management table 11126, to thereby determine the micro DC 11 which includes the node management module 11122.

The management node 10 selects, based on the number of groups to be built and a size thereof, as many micro management nodes 12 as the number of groups from among the determined micro DCs 11, and transmits a selection command to the selected micro DC 11. For example, in a case where three groups are to be built, the management node 10 selects three micro management nodes 12.

On this occasion, the management node 10 may select the optimum micro management node 12 based on information such as the attribute information 111267. For example, the management node 10 may select the micro management nodes 12 so that the arrangement thereof is distributed.

The management node 10 updates the running information 111265 of an entry corresponding to the selected micro DC 11 to the value "MANAGING". Further, the management node 10 stores an address of the selected micro DC 11 in the micro management node address 111272 of the group management table 11127.

The above-mentioned processing is performed in Step S101.

Next, the management node 10 receives the measurement result of the network quality from the selected micro management node 12 (Step S103).

The management node 10 determines whether or not the network quality satisfies a predetermined condition based on the received measurement result (Step S105). Specifically, the following processing is executed.

The management node 10 aggregates the measurement result received from each micro management node 12. The management node 10 determines, based on an aggregation result and the respective management tables, whether or not there are a given number of micro DCs 11 or more whose measurement results are bad. And the management node 10 determines, based on an aggregation result and the respective management tables, whether or not there is a micro DC 11 whose network quality is not measured.

For example, in a case where the value of the RTT is larger than a predetermined threshold value, it is determined that there is the micro DC 11 whose measurement result is bad. It should be noted that the threshold value is set in advance.

In a case where there are the given number of micro DCs 11 or more whose measurement results are bad, or a case where there is the micro DC 11 whose network quality is not measured, the management node 10 determines that the network quality fails to satisfy the predetermined condition. On the other hand, in a case where the number of micro DCs 11 whose measurement result is bad is less than the given number and a case where the network quality is measured on all the micro DCs 11, the management node 10 determines that the network quality satisfies the predetermined condition.

In a case where it is determined that the network quality fails to satisfy the predetermined condition, the management node 10 selects the micro management node 12 again based on the measurement result (Step S113), and then returns to Step S103. It should be noted that in order to cancel the setting of the micro management node 12, the management node 10 transmits a cancel command to the micro management node 12.

In a case where it is determined that the network quality satisfies the predetermined condition, the management node 10 then determines whether or not there is a micro management node 12 having a similar measurement result (Step S107). Such determination is made in order to avoid a situation in which a group having the same micro DC 11 as its component is generated and an efficiency of managing the group thus becomes lower.

Specifically, the management node 10 compares the measurement results received from the respective micro management nodes 12 with one another, and determines whether or not there is a similar measurement result. For example, in a case where the measurement results are transmitted as information having a table format, when a given number of entries or more whose errors of the RTT between the micro management node 12 and the same micro DC 11 each fall within a predetermined threshold value exist, it is determined that the measurement result is similar.

In a case where it is determined that there is a micro management node 12 having a similar measurement result, the management node 10 selects the micro management node 12 again (Step S113), and returns to Step S103.

In a case where it is determined that there is no micro management node 12 having a similar measurement result, the management node 10 determines a configuration of the group based on the measurement results (Step S109).

On this occasion, after determining the configuration of the group, the management node 10 updates the respective management tables as follows.

The management node 10 stores, in the calculation performance 111273 of each entry of the group management table 11127, a total value of the values of the calculation performance 111264 of the micro DCs 11 constituting the group. The management node 10 aggregates the attribute information 111267 of the micro DCs 11 constituting the group, and stores an aggregation result in the attribute information 111276. It should be noted that in the calculation performance 111273, a value obtained after being corrected based on a notification from the micro management node 12 may be stored.

Further, the management node 10 stores, in the assigned group 111266 of the micro DC management table 11126, the identifier of the group to which the corresponding micro DC 11 belongs.

It should be noted that in a case where a request is made from a client to the micro management node 12, the micro management node 12 notifies the management node 10 of the identifier of the service which is newly added. In a case of receiving the notification, the management node 10 adds to the service 111275 the identifier of the service of which the management node 10 is notified.

As a method of determining the configuration of the group in Step S109, for example, the following method is conceivable.

As one method, a method of allocating, for each micro management node 12, the micro DCs 11 in ascending order of its RTT between the micro DC 11 and the micro management node 12 is conceivable.

Alternatively, as another method, a method of allocating the micro DCs 11 in consideration of the service is conceivable. In a case where a service to be provided for each group and a magnitude of a processing load of the service are known in advance, constitution information such as a function (attribute) necessary for providing the service is reflected to the allocation of the micro DCs 11. Specifically, the following processing is performed.

The management node 10 refers to the service management table 11124 to extract, based on the estimated load 111283 and the attribute information 111286, a condition necessary for a group to which the service is to be provided.

In order from the service having the hardest condition to be satisfied, the management node 10 searches the micro DC management table 11126, searches for, based on the received measurement result, the micro management node 12 which is easily used to constitute a group satisfying the condition, and selects the micro DCs 11 constituting the group having the retrieved micro management node 12 as its center.

In a case where the group having the computer resource which is sufficient for providing the service is-built, the management node 10 performs the same processing on the service having the second hardest condition.

It should be noted that there may be a case where a group which is already determined to provide a service is used to provide another service. In this case, in consideration of a processing load and attribute information of the service which is already allocated, a new micro DC 11 is allocated to the group.

An allocation status of the micro DCs 11 to the groups is reflected to the micro DC management table 11126 and the group management table 11127.

After the group allocation is completed for all the services, the management node 10 further manages the micro DC 11 which is not allocated to any groups as the micro DC 11 which provides a computer resource for backup, and ends the processing.

The method of determining the configuration of the group is described above. The description is given now referring back to FIG. 11.

After determining the configuration of the group, the management node 10 transmits to the micro management node 12 a group build instruction (Step S111).

On this occasion, the management node 10 acquires from the micro DC management table 11126 information on the micro DCs 11 constituting the group, and acquires from the service management table 11128 information on the service provided by each group. The management node 10 generates the group build instruction including the acquired pieces of information. It should be noted that group configuration information includes at least the name of the micro DC 11, the address of the micro DC 11, the attribute information, the identifier of the service, and the providing target.

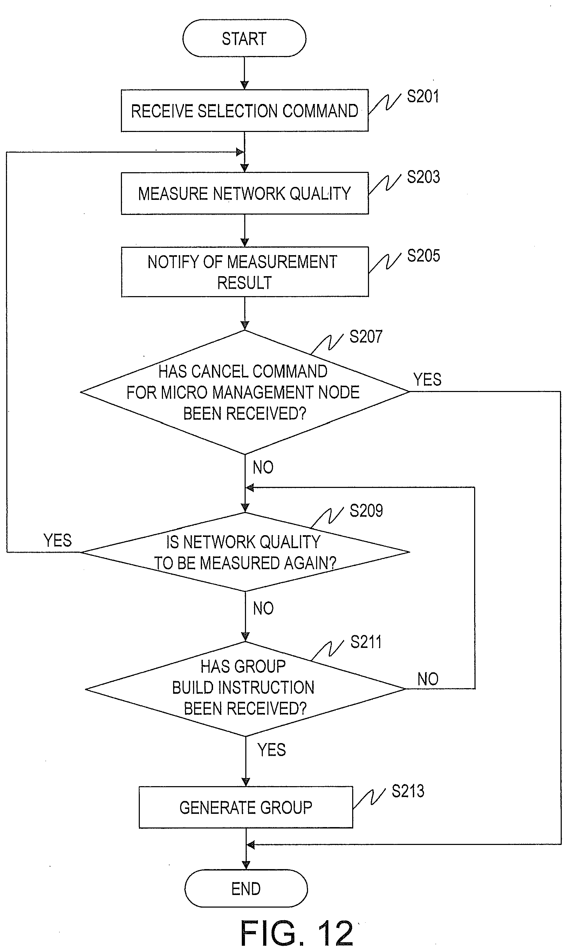

FIG. 12 is a flowchart illustrating processing executed by the micro management node 12 according to the embodiment of this invention.

The processing to be described below is executed by the gateway 111 included in the micro DC 11.

In a case of receiving the selection command from the management node 10, the gateway 111 calls the node management module 11122, and starts the processing as the micro management node 12 (Step 201). In the following, the processing is described with the use of the micro management node 12 as its subject.

The micro management node 12 measures the network quality between the micro management node 12 and the micro DC 11 as a measuring target, and notifies the management node 10 of a measurement result (Steps S203 and S205). It should be noted that the measurement result includes the identifier of the micro management node 12, the identifier of the micro DC 11 as the measuring target, and various parameters indicating the network quality.

A method of measuring the network quality between the micro management node 12 and the micro DC 11 as the measuring target is now described.

First, in order to measure the RTT, the micro management node 12 transmits by multicast transmission RTT measurement packets to the micro DCs 11 existing nearby. In a case of receiving the RTT measurement packet, the micro DC 11 returns a response to the packet to the micro management node 12 as in a ping.

On this occasion, in a case where a packet to be transmitted by multicast transmission is an IP packet, the micro management node 12 sets a time to live (TTL) to a small value so that the packet can arrive at only the micro DCs 11 which are included in a range within a specific number of hops in the network. In other words, the TTL of the packet is set to a small value so that the RTT measurement packets can be transmitted to only the micro DCs 11 existing nearby.

The micro management node 12 records as the measurement result of the RTT an address and an arrival interval of the micro DC 11 as the measuring target.

The micro management node 12 executes processing of measuring the RTT a plurality of times, and measures a fluctuation of the magnitude of the RTT as well. In this embodiment, the micro DC 11 having a small RTT or having a small fluctuation of the RTT, which is determined from the measurement result of the RTT, is selected as a candidate for the micro DC 11 constituting the group.

After measuring the RTT, the micro management node 12 measures a fluctuation of time synchronization between the micro management node 12 and the micro DC 11 as the candidate.

For measuring the fluctuation of the time synchronization, in a case where a time synchronization protocol via the network such as the NTP or IEEE 1588 is used to perform the time synchronization, and in a case where a time synchronization protocol by radio such as the GPS is used to perform the time synchronization, the micro management node 12 transmits/receives a packet containing time information to/from the micro DC 11, to thereby measure the difference of the time synchronization.

On this occasion, the micro management node 12 records, instead of the magnitude of the difference of the time synchronization, information indicating how much the difference of the time information fluctuates. The management node 10 uses the above-mentioned information in order to determine an amount of fluctuation of a delay time which is caused by a traffic load in a communication path between the micro management node 12 and the micro DC 11.

The management node 10 can determine that as the above-mentioned amount of fluctuation of the difference becomes smaller, a less traffic load is imposed on the communication path, and the delay is thus stable. When a service in which a stable delay time of communication is emphasized is provided, the management node 10 can determine the configuration of the group with the use of above-mentioned value as a condition.

It should be noted that the above-mentioned amount of fluctuation of the difference varies every moment, and hence the micro management node 12 measures the above-mentioned amount of fluctuation of the difference even after building the group.

The micro management node 12 determines whether or not the cancel command has been received from the management node 10 (Step S207).

In a case where it is determined that the cancel command has been received from the management node 10, the micro management node 12 stops the node management module 11122, and ends the processing.

In a case where it is determined that the cancel command has not been received from the management node 10, the micro management node 12 then determines whether or not the network quality needs to be measured again (Step S209). Specifically, the micro management node 12 determines whether or not the selection command has been received again from the management node 10. This means that, in a case where the management node 10 has selected the micro management node 12 again, the current micro management node 12 has been selected as a new micro management node 12 again.

In a case where it is determined that the network quality needs to be measured again, the micro management node 12 returns to Step S203, and executes the same processing.

In a case where it is determined that the network quality does not need to be measured again, the micro management node 12 then determines whether or not the group build instruction has been received (Step S211).

In a case where it is determined that the group build instruction has not been received, the micro management node 12 returns to Step S209, and executes the same processing.

In a case where it is determined that the group build instruction is received, the micro management node 12 generates the group based on the received group build instruction, and ends the processing (Step S213). Specifically, the following processing is executed.

The micro management node 12 updates, based on the received group build instruction, the group member management table 11123 and the service management table 11124.

Thereafter, the micro management node 12 periodically monitors the network quality between the micro management node 12 and the micro DCs 11 included in the group. In a case where the network quality deteriorates and it thus becomes difficult to maintain a service quality, the micro management node 12 notifies the management node 10 of the fact that it is difficult to maintain the service quality. In a case of receiving the above-mentioned notification, the management node 10 deletes a corresponding micro DC 11 from the group, and adds an alternative micro DC 11 to the group or rebuilds a new group.

Further, in a case where a specific micro DC 11 is used to provide the service, a case where the time synchronization is performed, or a case where the redundant configuration is built, the micro management node 12 periodically monitors the network quality between the micro management node 12 and the specific micro DC 11. In a case where the network quality deteriorates and it thus becomes difficult to maintain the service quality with the use of the specific micro DC 11, the micro management node 12 changes a combination of the micro DCs 11 for providing the service.

Still further, the micro management node 12 may store the measurement result of the network quality as a log. In this manner, the micro management node 12 can detect the deterioration of the network quality from a past history.

Next, processing performed when a new micro DC 11 is added to the data center system is described.

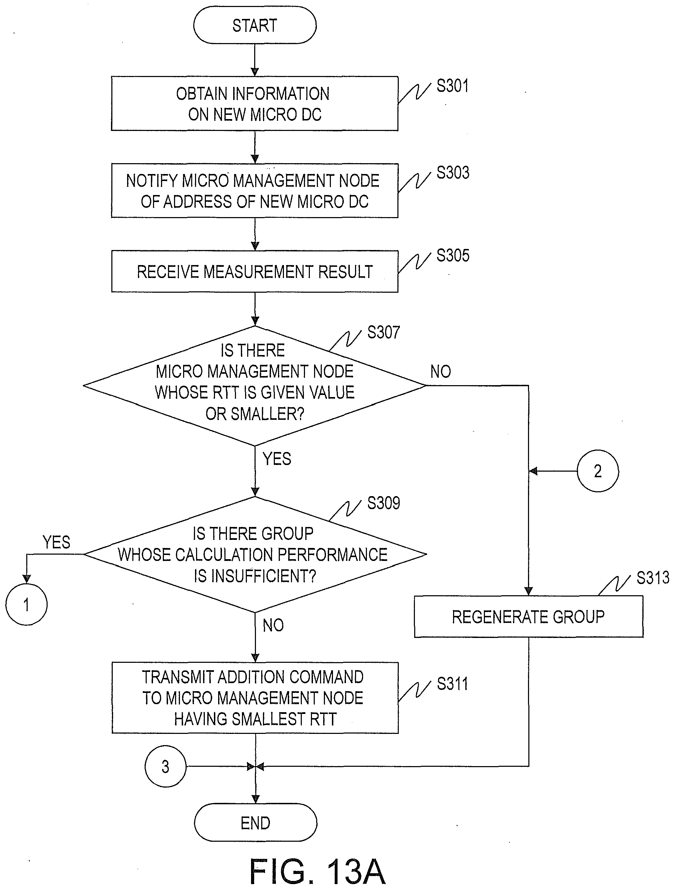

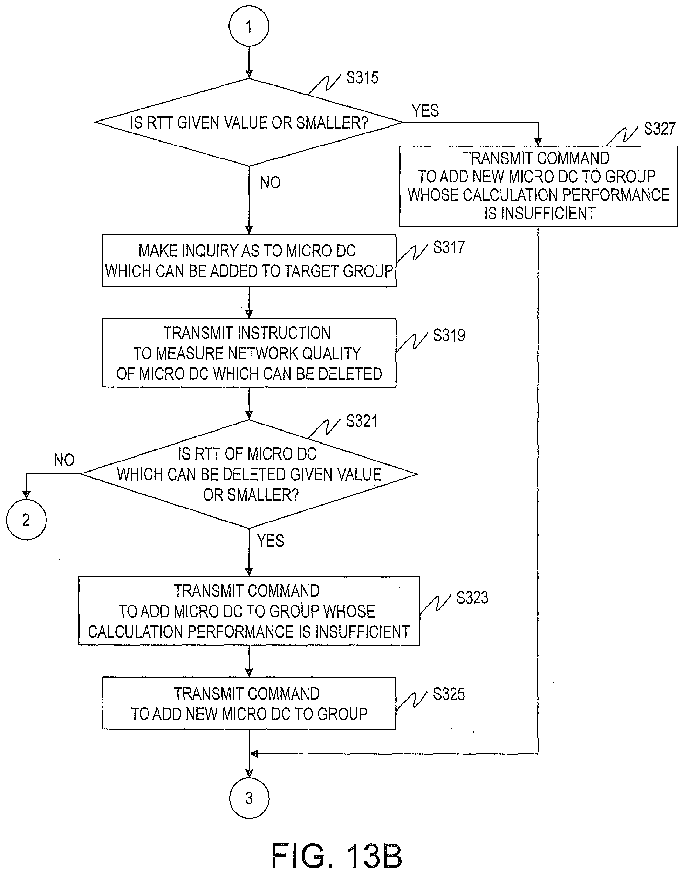

FIGS. 13A and 13B are flowcharts illustrating processing executed by the management node 10 in a case where the new micro DC 11 is added according to the embodiment of this invention.

The management node 10 obtains information on the new micro DC 11 which is added (Step S301). For example, a method involving inputting, by the user, information on the new micro DC 11 to the management node 10 is conceivable, but this invention is not limited by a method of obtaining the information on the new micro DC 11. It should be noted that the information on the new micro DC 11 includes various kinds of information necessary for generating the micro DC management table 11126.

The management node 10 notifies the micro management node 12 of an address of the new micro DC 11 (Step S303). In a case of receiving the address, each micro management node 12 measures the network quality between the micro management node 12 and the new micro DC 11. Specifically, each micro management node 12 transmits the RTT measurement packet to the address of which the micro management node 12 is notified, and measures the network quality such as the RTT.

The management node 10 receives from each micro management node 12 a measurement result of the network quality between the micro management node 12 and the new micro DC 11 (Step S305).

The management node 10 determines, based on the received measurement result, whether or not there is a micro management node 12 whose RTT, between the micro management node 12 and the new micro DC 11 is a given value or smaller (Step S307).

In a case where it is determined that there is no micro management node 12 whose RTT between the micro management node 12 and the new micro DC 11 is the given value or smaller, the management node 10 executes the processing illustrated in FIG. 11 in order to rebuild the group, and ends the processing (Step S313). This is because with the current group configuration, the new micro DC 11 cannot be added and hence a new group including the new micro DC 11 needs to be rebuilt.

In a case where it is determined that there is the micro management node 12 whose RTT between the micro management node 12 and the new micro DC 11 is the given value or smaller, the management node 10 refers to the group management table 11127, and then determines whether or not there is a group whose calculation performance is insufficient (Step S309). For example, in a case where the difference between the value of the calculation performance 111273 and the value of the load 1111274 is a predetermined threshold value or smaller, the management node 10 determines that the calculation performance is insufficient. The group whose calculation performance is insufficient is hereinafter also referred to as target group.

In a case where it is determined that there is no target group, the management node 10 transmits, to the micro management node 12 having the smallest RTT between the micro management node 12 and the new micro DC 11, an addition command to add the new micro DC 11 to a group managed by the micro management node 12, and ends the processing (Step S311). It should be noted that in the addition command, various kinds of information on the new micro DC 11 are stored.

The micro management node 12 adds, based on the received addition command, the new micro DC 11 to the group, and updates the group member management table 11123.

In a case where it is determined that there is the target group, the management node 10 then determines whether or not an RTT between the micro management node 12 which manages the target group and the new micro DC 11 is a given value or smaller (Step S315). In other words, it is determined whether or not the new micro DC 11 can be added to the target group. The micro management node 12 which manages the target group is hereinafter also referred to as target micro management node 12.

In a case where it is determined that the RTT between the target micro management node 12 and the new micro DC 11 is the given value or smaller, in other words, in a case where it is determined that the new micro DC 11 can be added to the target group, the management node 10 transmits to the micro management node 12 the addition command to add the new micro DC 11 to the group, and ends the processing (Step S327).

In a case where it is determined that the RTT between the micro management node 12 and the new micro DC 11 is not the given value or smaller, the management node 10 makes an inquiry, to the micro management node 12 whose RTT between the micro management node 12 and the new micro DC 11 is the given value or smaller, as to whether or not there is a micro DC 11 which can be added to the target group (Step S317).

In a case where receiving the inquiry, the micro management node 12 refers to the group member management table 11123 and the service management table 11124 to determine whether or not there is a micro DC 11 which can be deleted from the group. For example, based on the calculation performance and the attribute information which are obtained when a predetermined micro DC 11 is deleted, the micro management node 12 determines whether or not the quality of the provided service can be maintained.

The micro management node 12 transmits to the management node 10 a response including an address of the micro DC 11 which can be deleted.

The management node 10 transmits to the target micro management node 12 a measurement instruction to measure the network quality, which includes the address of the micro DC 11 which can be deleted (Step S319).

Based on the address included in the measurement instruction, the target micro management node 12 transmits to the micro DC 11 which can be deleted the RTT measurement packet and the like to measure the network quality. The target micro management node 12 transmits a measurement result to the management node 10.

The management node 10 determines, based on the received measurement result, whether or not there is a micro DC 11 whose RTT between the micro DC 11 and the target micro management node 12 is a given value or smaller, of the micro DCs 11 which can be deleted (Step S321). The micro DC 11 whose RTT between the micro DC 11 and the target micro management node 12 is the given value or smaller of the micro DCs 11 which can be deleted is hereinafter also referred to as addition candidate micro DC 11.

In a case where it is determined that there is no addition candidate micro DC 11, the management node 10 proceeds to Step S313.

In a case where it is determined that there is the addition candidate micro DC 11, the management node 10 transmits to the target micro management node 12 an addition command to add the addition candidate micro DC 11 to the target group (Step S323). It should be noted that when there are a plurality of the addition candidate micro DCs 11, a method involving adding the addition candidate micro DCs 11 in ascending order of RTTs is conceivable.

The management node 10 further transmits, to the micro management node 12 whose RTT between the micro management node 12 and the new micro DC 11 is the given value or smaller, a deletion instruction to delete the addition candidate micro DC 11 from the group and an addition command to add the new micro DC 11 to the group, and ends the processing (Step S325).

According to this embodiment, the management node 10 and the micro DC 11 belonging to a predetermined group can detect an occurrence of failure in the micro management node 12 in a case where periodic communication is not established to/from the micro management node 12.

In a case where the micro DC 11 detects an occurrence of failure in the micro management node 12, the micro DC 11 notifies the management node 10 of the fact that the micro DC 11 cannot communicate to/from the micro management node 12, in other words, the fact that there is no micro management node 12.

In a case where not being able to communicate to/from the micro management node 12 or when receiving from the micro DC 11 a notification of the fact that there is no micro management node 12, the management node 10 selects a new micro management node 12 from among the micro DCs 11 included in the group managed by the micro management node 12 in which the failure has occurred.

It should be noted that when there is no micro DC 11 which is to be a candidate for the micro management node 12, the management node 10 rebuilds the group.

In this embodiment, one micro management node 12 is determined, but in order to deal with the failure of the micro management node 12, when building the group, the management node 10 may set the micro DC 11 as an alternative micro management node 12.

In this case, the management node 10 only needs to store in the group management table 11127 an address of the alternative micro management node.

In a case where the user inputs a request for providing the service, a node which has received the request for providing the service notifies each group which provides the requested service of the request, and selects a group as a coupling destination in consideration of the service quality such as a response time.

According to the embodiment of this invention, the group of the micro DCs 11 can be appropriately formed based on the network quality. The quality of the service provided by using a cloud via the network can be thus maintained.

While the present invention has been described in detail and pictorially in the accompanying drawings, the present invention is not limited to such detail but covers various obvious modifications and equivalent arrangements, which fall within the purview of the appended claims.

## Claims

1. A computer system, comprising a plurality of subsystems (11) coupled via a network,
each of the plurality of subsystems (11) comprising at least one computer (112) and at least one network device (111),
the at least one computer (112) including a first processor, a first memory coupled to the first processor, and a first network interface for communicating to/from another device,
the at least one network device (111) including a second processor (1111), a second memory (1112) coupled to the second processor (1111), and a second network interface (1114) for communicating to/from another device,
the computer system comprising a subsystem control module (10) for managing the plurality of subsystems (11),
**characterized by**
the subsystem control module (10) being configured to:
select one or more subsystems (11) as a group management node (12) from among the plurality of subsystems (11), in a case of receiving a build request for a group which is used for providing a service and which includes at least one subsystem (11); and
command the one or more group management nodes (12) to measure a network quality between the respective group management node (12) and each of the plurality of subsystems (11) other than the respective group management node (12);
each of the one or more group management nodes (12) being configured to:
measure, by using an IP packet including a time to live, TTL, the network quality between the respective group management node (12) and each of the plurality of subsystems (11) other than the respective group management node (12) that are included in a predetermined network range, wherein the predetermined network range is a range within a predetermined number of hops in the network from the respective group management node (12), and wherein the TTL is set to a value small enough so that the IP packet can only arrive at the subsystems (11) other than the respective group management node (12) that are included in the predetermined network range;
the subsystem control module (10) being configured to:
receive a measurement result of the network quality from each of the one or more group management nodes (12);
determine, based on the measurement result of the network quality received from each of the one or more group management nodes (12), a configuration of the group which includes at least one subsystem (11); and
transmit to each of the one or more group management nodes (12) a group build command including information on the determined configuration of the group.

2. The computer system according to claim 1,
wherein the subsystem control module (10) holds subsystem management information for managing the plurality of subsystems (11), and
wherein the subsystem control module (10) is further configured to:
determine, based on the measurement result of the network quality received from each of the one or more group management nodes (12) and the subsystem management information, whether there are at least a given number of subsystems (11) whose network qualities fail to satisfy a predetermined condition,
determine, based on the measurement result of the network quality received from each of the one or more group management nodes (12) and the subsystem management information, whether there is a subsystem (11) whose network quality is yet to be measured; and
in a case where it is determined that there are at least the given number of subsystems (11) whose network qualities fail to satisfy the predetermined condition, or in a case where it is determined that there is the subsystem (11) whose network quality is yet to be measured exists, based on the measurement result of the network quality received from each of the one or more group management nodes (12), newly select the group management node (12).

3. The computer system according to claim 1, wherein the subsystem control module (10) is further configured to:
in a case of receiving measurement results of network quality from a plurality of the group management nodes (12), compare measurement results of the network quality received from the plurality of the group management nodes (12) with one another, to thereby determine whether or not there is a measurement result having a similar network quality; and
in a case where there is a measurement result having a similar network quality, newly select the group management node (12).

4. The computer system according to claim 1, wherein each of the one or more group management nodes (12) measures, as the network quality between the respective group management node (12) and each of the plurality of subsystems (11) other than the respective group management node (12), at least one of a round-trip time which is a period of time from when a packet is transmitted to each of the plurality of subsystems (11) to when a response is received from each of the plurality of subsystems (11), a fluctuation of the period of time of the round-trip time which is calculated by measuring the round-trip time a plurality of times, and a degree of accuracy of time synchronization via the network.

5. The computer system according to claim 1,
wherein the group management node (12) is configured to:
hold group management information for managing the at least one subsystem (11) included in the group;
based on the received group build command, build the group and generate the group management information;
periodically measure a network quality of the at least one subsystem (11) included in the group; and
transmit to the subsystem control module (10) a measurement result of the network quality, and
wherein the subsystem control module (10) changes, based on the received measurement result of the network quality, in a case where the network quality fails to satisfy a predetermined condition, the configuration of the group.

6. A subsystem management method for use in a computer system including a plurality of subsystems (11) coupled via a network,
each of the plurality of subsystems (11) including at least one computer (112) and at least one network device (111),
the at least one computer (112) including a first processor, a first memory coupled to the first processor, and a first network interface for communicating to/from another device,
the at least one network device (111) including a second processor (1111), a second memory (1112) coupled to the second processor (1111), and a second network interface (1114) for communicating to/from another device,
the computer system including a subsystem control module (10) for managing the plurality of subsystems (11),
**characterized by**
the subsystem management method including:
a first step of selecting, by the subsystem control module (10), one or more subsystems (11) as a group management node (12) from among the plurality of subsystems (11), in a case where the subsystem control module (10) receives a build request for a group which is used for providing a service and which includes at least one subsystem (11); and
a second step of measuring, by the one or more group management nodes (12), a network quality between the respective group management node (12) and each of the plurality of subsystems (11) other than the respective group management node (12) that are included in a predetermined network range, wherein in the second step the network quality is measured by using an IP packet including a time to live, TTL, wherein the predetermined network range is a range within a predetermined number of hops in the network from the respective group management node (12), and wherein the TTL is set to a value small enough so that the IP packet can only arrive at the subsystems (11) other than the respective group management node (12) that are included in the predetermined network range;
a third step of receiving, by the subsystem control module (10), a measurement result of the network quality from each of the one or more group management nodes (12);
a fourth step of determining, by the subsystem control module (10), based on the measurement result of the network quality received from each of the one or more group management nodes (12), a configuration of the group which includes at least one subsystem (11); and
a fifth step of transmitting, by the subsystem control module (10), to each of the one or more group management nodes (12) a group build command including information on the determined configuration of the group.

7. The subsystem management method according to claim 6,
wherein the subsystem control module (10) holds subsystem management information for managing the plurality of subsystems (11), and
wherein the fourth step includes steps of:
determining, based on the measurement result of the network quality received from each of the one or more group management nodes (12) and the subsystem management information, whether there are at least a given number of subsystems (11) whose network qualities fail to satisfy a predetermined condition;
determining, based on the measurement result of the network quality received from each of the one or more group management nodes (12) and the subsystem management information, whether there is a subsystem (11) whose network quality is yet to be measured; and
in a case where it is determined that there are at least the given number of subsystems (11) whose network qualities fail to satisfy the predetermined condition, or in a case where it is determined that there is the subsystem (11) whose network quality is yet to be measured, based on the measurement result of the network quality received from each of the one or more group management nodes (12), newly selecting the group management node (12).

8. The subsystem management method according to claim 6, wherein the fourth step includes steps of:
in a case where measurement results of network quality are received from a plurality of the group management nodes (12), comparing measurement results of the network quality received from the plurality of the group management nodes (12) with one another, to thereby determine whether there is a measurement result having a similar network quality; and
in a case where there is a measurement result having a similar network quality, newly selecting the group management node (12).

9. The subsystem management method according to claim 6, wherein each of the one or more group management nodes (12) measures, as the network quality between the respective group management node (12) and each of the plurality of subsystems (11) other than the respective group management node (12), at least one of a round-trip time which is a period of time from when a packet is transmitted to each of the plurality of subsystems (11) to when a response is received from each of the plurality of subsystems (11), a fluctuation of the period of time of the round-trip time which is calculated by measuring the round-trip time a plurality of times, and a degree of accuracy of time synchronization via the network.

10. The subsystem management method according to claim 6,
wherein the group management node (12) holds group management information for managing the at least one subsystem (11) included in the group, and
wherein the subsystem management method further comprises:
based on the received group build command, building, by the group management node (12), the group and generating the group management information;
periodically measuring, by the group management node (12), a network quality of the at least one subsystem (11) included in the group;
transmitting, by the group management node (12), to the subsystem control module (10) a measurement result of the network quality; and
changing, by the subsystem control module (10), the configuration of the group based on the received measurement result of the network quality, in a case where the network quality fails to satisfy a predetermined condition.

## Patentansprüche

1. Computersystem, das mehrere Untersysteme (11) umfasst, die über ein Netz gekoppelt sind,
wobei jedes der mehreren Untersysteme (11) mindestens einen Computer (112) und mindestens eine Netzvorrichtung (111) umfasst,
wobei der mindestens eine Computer (112) einen ersten Prozessor, einen ersten Speicher, der an den ersten Prozessor gekoppelt ist, und eine erste Netzschnittstelle zum Kommunizieren zu/von einer anderen Vorrichtung enthält,
wobei die mindestens eine Netzvorrichtung (111) einen zweiten Prozessor (1111), einen zweiten Speicher (1112), der an den zweiten Prozessor (1111) gekoppelt ist, und eine zweite Netzschnittstelle (1114) zum Kommunizieren zu/von einer anderen Vorrichtung enthält,
wobei das Computersystem ein Untersystemsteuermodul (10) zum Managen der mehreren Untersysteme (11) umfasst,
**dadurch gekennzeichnet, dass**
das Untersystemsteuermodul (10) konfiguriert ist:
im Fall des Empfangens einer Aufbauanforderung für eine Gruppe, die verwendet wird, um einen Dienst zu liefern, und die mindestens ein Untersystem (11) enthält, ein oder mehrere Untersysteme (11) als einen Gruppenmanagementknoten (12) aus den mehreren Untersystemen (11) auszuwählen; und
dem einen oder den mehreren Gruppenmanagementknoten (12) zu befehlen, eine Netzqualität zwischen dem jeweiligen Gruppenmanagementknoten (12) und jedem der mehreren Untersysteme (11), die von dem jeweiligen Gruppenmanagementknoten (12) verschieden sind, zu messen;
wobei jeder des einen oder der mehreren Gruppenmanagementknoten (12) konfiguriert ist:
durch Verwenden eines IP-Pakets, das eine Lebenszeit, TTL, enthält, die Netzqualität zwischen dem jeweiligen Gruppenmanagementknoten (12) und jedem der mehreren Untersysteme (11), die von dem jeweiligen Gruppenmanagementknoten (12) verschieden sind und die in einem vorgegebenen Netzbereich enthalten sind, zu messen, wobei der vorgegebene Netzbereich ein Bereich innerhalb einer vorgegebenen Anzahl von Sprüngen in dem Netz von dem jeweiligen Gruppenmanagementknoten (12) ist und wobei die TTL auf einen Wert eingestellt ist, der klein genug ist, so dass das IP-Paket nur an den Untersystemen (11), die von dem jeweiligen Gruppenmanagementknoten (12) verschieden sind und die in dem vorgegebenen Netzbereich enthalten sind, ankommen kann;
wobei das Untersystemsteuermodul (10) konfiguriert ist:
ein Messergebnis der Netzqualität von jedem des einen oder der mehreren Gruppenmanagementknoten (12) zu empfangen;
anhand des Messergebnisses der Netzqualität, das von jedem des einen oder der mehreren Gruppenmanagementknoten (12) empfangen wurde, eine Konfiguration der Gruppe zu bestimmen, die mindestens ein Untersystem (11) enthält; und
an jeden des einen oder der mehreren Gruppenmanagementknoten (12) einen Gruppenaufbaubefehl zu senden, der Informationen über die bestimmte Konfiguration der Gruppe enthält.

2. Computersystem nach Anspruch 1,
wobei das Untersystemsteuermodul (10) Untersystemmanagementinformationen zum Managen der mehreren Untersysteme (11) hält und
wobei das Untersystemsteuermodul (10) ferner konfiguriert ist:
anhand des Messergebnisses der Netzqualität, das von jedem des einen oder der mehreren Gruppenmanagementknoten (12) empfangen wurde, und der Untersystemmanagementinformationen zu bestimmen, ob es zumindest eine gegebene Anzahl von Untersystemen (11) gibt, deren Netzqualitäten scheitern, eine vorgegebene Bedingung zu erfüllen,
anhand des Messergebnisses der Netzqualität, das von jedem des einen oder der mehreren Gruppenmanagementknoten (12) empfangen wurde, und der Untersystemmanagementinformationen zu bestimmen, ob es ein Untersystem (11) gibt, dessen Netzqualität noch zu messen ist; und
in einem Fall, in dem bestimmt wird, dass es zumindest die gegebene Anzahl von Untersysteme (11) gibt, deren Netzqualitäten scheitern, die vorgegebene Bedingung zu erfüllen, oder in einem Fall, in dem bestimmt wird, dass es das Untersystem (11) gibt, dessen Netzqualität noch zu messen ist, anhand des Messergebnisses der Netzqualität, das von jedem des einen oder der mehreren Gruppenmanagementknoten (12) empfangen wurde, den Gruppenmanagementknoten (12) neu auszuwählen.

3. Computersystem nach Anspruch 1, wobei das Untersystemsteuermodul (10) ferner konfiguriert ist:
in einem Fall des Empfangens der Messergebnisse der Netzqualität von mehreren der Gruppenmanagementknoten (12) die Messergebnisse der Netzqualität, die von den mehreren Gruppenmanagementknoten (12) empfangen wurden, miteinander zu vergleichen, um dadurch zu bestimmen, ob es ein Messergebnis mit einer ähnlichen Netzqualität gibt oder nicht; und
in einem Fall, in dem es ein Messergebnis mit einer ähnlichen Netzqualität gibt, den Gruppenmanagementknoten (12) neu auszuwählen.

4. Computersystem nach Anspruch 1, wobei jeder des einen oder der mehreren Gruppenmanagementknoten (12) als die Netzqualität zwischen dem jeweiligen Gruppenmanagementknoten (12) und jedem der mehreren Untersysteme (11), die von dem jeweiligen Gruppenmanagementknoten (12) verschieden sind, eine Umlaufzeit, die eine Zeitdauer, ab dann, wenn ein Paket an jedes der mehreren Untersysteme (11) gesendet wird, bis zu dann, wenn eine Antwort von jedem der mehreren Untersysteme (11) empfangen wird, ist, und/oder eine Fluktuation der Zeitdauer der Umlaufzeit, die durch Messen der Umlaufzeit mehrere Male berechnet wird, und/oder ein Genauigkeitsmaß der Zeitsynchronisation über das Netz misst.

5. Computersystem nach Anspruch 1,
wobei der Gruppenmanagementknoten (12) konfiguriert ist:
Gruppenmanagementinformationen zum Managen des mindestens einen Untersystems (11), das in der Gruppe enthalten ist, zu halten;
anhand des empfangenen Gruppenaufbaubefehls die Gruppe aufzubauen und die Gruppenmanagementinformationen zu erzeugen;
periodisch eine Netzqualität des mindestens einen Untersystems (11), das in der Gruppe enthalten ist, zu messen; und
ein Messergebnis der Netzqualität an das Untersystemsteuermodul (10) zu senden, und
wobei das Untersystemsteuermodul (10) anhand des empfangenen Messergebnisses der Netzqualität in einem Fall, in dem die Netzqualität scheitert, eine vorgegebene Bedingung zu erfüllen, die Konfiguration der Gruppe ändert.

6. Untersystemmanagementverfahren für die Verwendung in einem Computersystem, das mehrere Untersysteme (11) enthält, die über ein Netz gekoppelt sind,
wobei jedes der mehreren Untersysteme (11) mindestens einen Computer (112) und mindestens eine Netzvorrichtung (111) enthält,
wobei der mindestens eine Computer (112) einen ersten Prozessor, einen ersten Speicher, der an den ersten Prozessor gekoppelt ist, und eine erste Netzschnittstelle zum Kommunizieren zu/von einer anderen Vorrichtung enthält,
wobei die mindestens eine Netzvorrichtung (111) einen zweiten Prozessor (1111), einen zweiten Speicher (1112), der an den zweiten Prozessor (1111) gekoppelt ist, und eine zweite Netzschnittstelle (1114) zum Kommunizieren zu/von einer anderen Vorrichtung enthält,
wobei das Computersystem ein Untersystemsteuermodul (10) zum Managen der mehreren Untersysteme (11) enthält,
**dadurch gekennzeichnet, dass**
das Untersystemmanagementverfahren enthält:
einen ersten Schritt des Auswählens durch das Untersystemsteuermodul (10) eines-oder mehrerer Untersysteme (11) als einen Gruppenmanagementknoten (12) aus den mehreren Untersystemen (11) in einem Fall, in dem das Untersystemsteuermodul (10) eine Aufbauanforderung für eine Gruppe, die verwendet wird, um einen Dienst zu liefern und die mindestens ein Untersystem (11) enthält, empfängt, und
einen zweiten Schritt des Messens einer Netzqualität zwischen dem jeweiligen Gruppenmanagementknoten (12) und jedem der mehreren Untersysteme (11), die von dem jeweiligen Gruppenmanagementknoten verschieden sind und die in einem vorgegebenen Netzbereich enthalten sind, durch den einen oder die mehreren Gruppenmanagementknoten (12), wobei in dem zweiten Schritt die Netzqualität durch Verwenden eines IP-Pakets, das eine Lebenszeit, TTL, enthält, gemessen wird, wobei der vorgegebene Netzbereich ein Bereich innerhalb einer vorgegebenen Anzahl von Sprüngen in dem Netz von dem jeweiligen Gruppenmanagementknoten (12) ist und wobei die TTL auf einen Wert eingestellt ist, der klein genug ist, so dass das IP-Paket nur an den Untersystemen (11), die von dem jeweiligen Gruppenmanagementknoten (12) verschieden sind und die in dem vorgegebenen Netzbereich enthalten sind, ankommen kann;
einen dritten Schritt des Empfangens eines Messergebnisses der Netzqualität von jedem des einen oder der mehreren Gruppenmanagementknoten (12) durch das Untersystemsteuermodul (10);
einen vierten Schritt des Bestimmens durch das Untersystemsteuermodul (10) anhand des Messergebnisses der Netzqualität, das von jedem des einen oder der mehreren Gruppenmanagementknoten (12) empfangen wurde, einer Konfiguration der Gruppe, die mindestens ein Untersystem (11) enthält; und
einen fünften Schritt des Sendes eines Gruppenaufbaubefehls, der Informationen über die bestimmte Konfiguration der Gruppe enthält, durch das Untersystemsteuermodul (10) an jeden des einen oder der mehreren Gruppenmanagementknoten (12).

7. Untersystemmanagementverfahren nach Anspruch 6,
wobei das Untersystemsteuermodul (10) Untersystemmanagementinformationen zum Mangen der mehreren Untersysteme (11) hält und
wobei der vierte Schritt die Schritte enthält:
Bestimmen anhand des Messergebnisses der Netzqualität, das von jedem des einen oder der mehreren Gruppenmanagementknoten (12) empfangen wurde, und der Untersystemmanagementinformationen, ob es zumindest eine gegebene Anzahl von Untersystemen (11) gibt, deren Netzqualitäten scheitern, eine vorgegebene Bedingung zu erfüllen;
Bestimmen anhand des Messergebnisses der Netzqualität, das von jedem des einen oder der mehreren Gruppenmanagementknoten (12) empfangen wurde, und der Untersystemmanagementinformationen, ob es ein Untersystem (11) gibt, dessen Netzqualität noch zu messen ist; und
in einem Fall, in dem bestimmt wird, dass es zumindest die gegebene Anzahl von Untersystemen (11) gibt, deren Netzqualität scheitern, die vorgegebene Bedingung zu erfüllen, oder in einem Fall, in dem bestimmt wird, dass es das Untersystem (11) gibt, dessen Netzqualität noch zu messen ist, Neuauswählen des Gruppenmanagementknotens (12) anhand des Messergebnisses der Netzqualität, das von jedem des einen oder der mehreren Gruppenmanagementknoten (12) empfangen wurde.

8. Untersystemmanagementverfahren nach Anspruch 6, wobei der vierte Schritt die Schritte enthält:
in einem Fall, in dem die Messergebnisse der Netzqualität von mehreren Gruppenmanagementknoten (12) empfangen werden, Vergleichen der Messergebnisse der Netzqualität, die von den mehreren Gruppenmanagementknoten (12) empfangen wurden, miteinander, um dadurch zu bestimmen, ob es ein Messergebnis mit einer ähnlichen Netzqualität gibt; und
in einem Fall, in dem es ein Messergebnis mit einer ähnlichen Netzqualität gibt, Neuauswählen des Gruppenmanagementknotens (12).

9. Untersystemmanagementverfahren nach Anspruch 6, wobei jeder des einen oder der mehreren Gruppenmanagementknoten (12) als die Netzqualität zwischen dem jeweiligen Gruppenmanagementknoten (12) und jedem der mehreren Untersysteme (11), das von dem jeweiligen Gruppenmanagementknoten (12) verschieden ist, eine Umlaufzeit, die eine Zeitdauer, ab dann, wenn ein Paket an jedes der mehreren Untersystems (11) gesendet wird, bis zu dann, wenn eine Antwort von jedem der mehreren Untersysteme (11) empfangen wird, ist, und/oder eine Fluktuation der Zeitdauer der Umlaufzeit, die durch Messen der Umlaufzeit mehrere Male berechnet wird, und/oder ein Genauigkeitsmaß der Zeitsynchronisation über das Netz misst.

10. Untersystemmanagementverfahren nach Anspruch 6,
wobei der Gruppenmanagementknoten (12) Gruppenmanagementinformationen hält, um das mindestens eine Untersystem (11), das in der Gruppe enthalten ist, zu managen, und
wobei das Untersystemmanagementverfahren ferner umfasst:
anhand des empfangenen Gruppenaufbaubefehls Aufbauen der Gruppe und Erzeugen der Gruppenmanagementinformationen durch den Gruppenmanagementknoten (12);
periodisch Messen einer Netzqualität des mindestens einen Untersystems (11), das in der Gruppe enthalten ist, durch den Gruppenmanagementknoten (12); und
Senden eines Messergebnisses der Netzqualität durch den Gruppenmanagementknoten (12) an das Untersystemsteuermodul (10); und
Ändern durch das Untersystemsteuermodul (10) der Konfiguration der Gruppe anhand des empfangenen Messergebnisses der Netzqualität in einem Fall, in dem die Netzqualität scheitert, eine vorgegebene Bedingung zu erfüllen.

## Revendications

1. - Système informatique, comprenant une pluralité de sous-systèmes (11) couplés par l'intermédiaire d'un réseau,
chacun de la pluralité de sous-systèmes (11) comprenant au moins un ordinateur (112) et au moins un dispositif de réseau (111),
l'au moins un ordinateur (112) comprenant un premier processeur, une première mémoire couplée au premier processeur et une première interface réseau pour communiquer vers/depuis un autre dispositif,
l'au moins un dispositif de réseau (111) comprenant un second processeur (1111), une seconde mémoire (1112) couplée au second processeur (1111) et une seconde interface réseau (1114) pour communiquer vers/depuis un autre dispositif,
le système informatique comprenant un module de commande de sous-systèmes (10) pour gérer la pluralité de sous-systèmes (11),
**caractérisé en ce que**
le module de commande de sous-systèmes (10) est configuré pour :
sélectionner un ou plusieurs sous-systèmes (11) en tant que noeud de gestion de groupe (12) parmi la pluralité de sous-systèmes (11), dans un cas de réception d'une requête de construction d'un groupe qui est utilisé pour fournir un service et qui comprend au moins un sous-système (11) ; et
donner l'instruction au ou aux noeuds de gestion de groupe (12) de mesurer une qualité de réseau entre le noeud de gestion de groupe (12) respectif et chacun de la pluralité de sous-systèmes (11) autres que le noeud de gestion de groupe (12) respectif ;
chacun du ou des noeuds de gestion de groupe (12) étant configuré pour :
mesurer, par utilisation d'un paquet IP comprenant une durée de vie, TTL, la qualité de réseau entre le noeud de gestion de groupe (12) respectif et chacun de la pluralité de sous-systèmes (11) autres que le noeud de gestion de groupe (12) respectif qui sont inclus dans une plage de réseau prédéterminée, la plage de réseau prédéterminée étant une plage dans un nombre prédéterminé de sauts dans le réseau à partir du noeud de gestion de groupe (12) respectif, et la TTL étant réglée à une valeur assez petite de telle sorte que le paquet IP peut uniquement arriver au niveau des sous-systèmes (11) autres que le noeud de gestion de groupe (12) respectif qui sont inclus dans la plage de réseau prédéterminée ;
le module de commande de sous-systèmes (10) étant configuré pour :
recevoir un résultat de mesure de la qualité de réseau à partir de chacun du ou des noeuds de gestion de groupe (12) ;
déterminer, sur la base du résultat de mesure de la qualité de réseau reçu à partir de chacun du ou des noeuds de gestion de groupe (12), une configuration du groupe qui comprend au moins un sous-système (11) ; et
transmettre, à chacun du ou des noeuds de gestion de groupe (12), une instruction de construction de groupe comprenant des informations sur la configuration déterminée du groupe.

2. - Système informatique selon la revendication 1,
dans lequel le module de commande de sous-systèmes (10) conserve des informations de gestion de sous-systèmes pour gérer la pluralité de sous-systèmes (11), et
dans lequel le module de commande de sous-systèmes (10) est en outre configuré pour :
déterminer, sur la base du résultat de mesure de la qualité de réseau reçu à partir de chacun du ou des noeuds de gestion de groupe (12) et des informations de gestion de sous-systèmes, s'il existe ou non au moins un nombre donné de sous-systèmes (11) dont les qualités de réseau ne parviennent pas à satisfaire à une condition prédéterminée,
déterminer, sur la base du résultat de mesure de la qualité de réseau reçu à partir de chacun du ou des noeuds de gestion de groupe (12) et des informations de gestion de sous-systèmes, s'il existe ou non un sous-système (11) dont la qualité de réseau doit encore être mesurée ; et
dans un cas dans lequel il est déterminé qu'il existe au moins le nombre donné de sous-systèmes (11) dont les qualités de réseau ne parviennent pas à satisfaire à la condition prédéterminée, ou dans un cas dans lequel il est déterminé qu'il existe le sous-système (11) dont la qualité de réseau doit encore être mesurée, sur la base du résultat de mesure de la qualité de réseau reçu à partir de chacun du ou des noeuds de gestion de groupe (12), sélectionner nouvellement le noeud de gestion de groupe (12).

3. - Système informatique selon la revendication 1, dans lequel le module de commande de sous-systèmes (10) est en outre configuré pour :
dans un cas de réception de résultats de mesure de qualité de réseau à partir d'une pluralité des noeuds de gestion de groupe (12), comparer des résultats de mesure de la qualité de réseau reçus à partir de la pluralité des noeuds de gestion de groupe (12) les uns aux autres, pour déterminer ainsi s'il existe ou non un résultat de mesure ayant une qualité de réseau similaire ; et
dans un cas dans lequel il existe un résultat de mesure ayant une qualité de réseau similaire, sélectionner nouvellement le noeud de gestion de groupe (12).

4. - Système informatique selon la revendication 1, dans lequel chacun du ou des noeuds de gestion de groupe (12) mesure, en tant que qualité de réseau entre le noeud de gestion de groupe (12) respectif et chacun de la pluralité de sous-systèmes (11) autres que le noeud de gestion de groupe (12) respectif, au moins un parmi un temps aller-retour qui est une période de temps allant du moment où un paquet est transmis à chacun de la pluralité de sous-systèmes (11) au moment où une réponse est reçue à partir de chacun de la pluralité de sous-systèmes (11), une fluctuation de la période de temps du temps aller-retour qui est calculée en mesurant le temps aller-retour une pluralité de fois, et un degré de précision de synchronisation temporelle par l'intermédiaire du réseau.

5. - Système informatique selon la revendication 1,
dans lequel le noeud de gestion de groupe (12) est configuré pour :
conserver des informations de gestion de groupe pour gérer l'au moins un sous-système (11) inclus dans le groupe ;
sur la base de l'instruction de construction de groupe reçue, construire le groupe et générer les informations de gestion de groupe ;
mesurer périodiquement une qualité de réseau de l'au moins un sous-système (11) inclus dans le groupe ; et
transmettre au module de commande de sous-systèmes (10) un résultat de mesure de la qualité de réseau, et
dans lequel le module de commande de sous-systèmes (10) modifie, sur la base du résultat de mesure reçu de la qualité de réseau, dans un cas dans lequel la qualité de réseau ne parvient pas à satisfaire à une condition prédéterminée, la configuration du groupe.

6. - Procédé de gestion de sous-systèmes destiné à être utilisé dans un système informatique comprenant une pluralité de sous-systèmes (11) couplés par l'intermédiaire d'un réseau,
chacun de la pluralité de sous-systèmes (11) comprenant au moins un ordinateur (112) et au moins un dispositif de réseau (111),
l'au moins un ordinateur (112) comprenant un premier processeur, une première mémoire couplée au premier processeur et une première interface réseau pour communiquer vers/depuis un autre dispositif,
l'au moins un dispositif de réseau (111) comprenant un second processeur (1111), une seconde mémoire (1112) couplée au second processeur (1111) et une seconde interface réseau (1114) pour communiquer vers/depuis un autre dispositif,
le système informatique comprenant un module de commande de sous-systèmes (10) pour gérer la pluralité de sous-systèmes (11),
**caractérisé en ce que**
le procédé de gestion de sous-systèmes comprend :
une première étape consistant à sélectionner, par le module de commande de sous-systèmes (10), un ou plusieurs sous-systèmes (11) en tant que noeud de gestion de groupe (12) parmi la pluralité de sous-systèmes (11), dans un cas dans lequel le module de commande de sous-systèmes (10) reçoit une requête de construction d'un groupe qui est utilisé pour fournir un service et qui comprend au moins un sous-système (11) ; et
une seconde étape consistant à mesurer, par le ou les noeuds de gestion de groupe (12), une qualité de réseau entre le noeud de gestion de groupe (12) respectif et chacun de la pluralité de sous-systèmes (11) autres que le noeud de gestion de groupe (12) respectif qui sont inclus dans une plage de réseau prédéterminée, où dans la seconde étape, la qualité de réseau est mesurée par utilisation d'un paquet IP comprenant une durée de vie (TTL), la plage de réseau prédéterminée étant une plage dans un nombre prédéterminé de sauts dans le réseau à partir du noeud de gestion de groupe (12) respectif, et la TTL étant réglée à une valeur assez petite de telle sorte que le paquet IP peut uniquement arriver au niveau des sous-systèmes (11) autres que le noeud de gestion de groupe (12) respectif qui sont inclus dans la plage de réseau prédéterminée ;
une troisième étape consistant à recevoir, par le module de commande de sous-systèmes (10), un résultat de mesure de la qualité de réseau à partir de chacun du ou des noeuds de gestion de groupe (12) ;
une quatrième étape consistant à déterminer, par le module de commande de sous-systèmes (10), sur la base du résultat de mesure de la qualité de réseau reçu à partir de chacun du ou des noeuds de gestion de groupe (12), une configuration du groupe qui comprend au moins un sous-système (11) ; et
une cinquième étape consistant à transmettre, par le module de commande de sous-systèmes (10), à chacun du ou des noeuds de gestion de groupe (12), une instruction de construction de groupe comprenant des informations sur la configuration déterminée du groupe.

7. - Procédé de gestion de sous-systèmes selon la revendication 6,
dans lequel le module de commande de sous-systèmes (10) conserve des informations de gestion de sous-systèmes pour gérer la pluralité de sous-systèmes (11), et
dans lequel la quatrième étape comprend les étapes consistant à :
déterminer, sur la base du résultat de mesure de la qualité de réseau reçu à partir de chacun du ou des noeuds de gestion de groupe (12) et des informations de gestion de sous-systèmes, s'il existe ou non au moins un nombre donné de sous-systèmes (11) dont les qualités de réseau ne parviennent pas à satisfaire à une condition prédéterminée ;
déterminer, sur la base du résultat de mesure de la qualité de réseau reçu à partir de chacun du ou des noeuds de gestion de groupe (12) et des informations de gestion de sous-systèmes, s'il existe ou non un sous-système (11) dont la qualité de réseau doit encore être mesurée ; et
dans un cas dans lequel il est déterminé qu'il existe au moins le nombre donné de sous-systèmes (11) dont les qualités de réseau ne parviennent pas à satisfaire à la condition prédéterminée, ou dans un cas dans lequel il est déterminé qu'il existe le sous-système (11) dont la qualité de réseau doit encore être mesurée, sur la base du résultat de mesure de la qualité de réseau reçu à partir de chacun du ou des noeuds de gestion de groupe (12), sélectionner nouvellement le noeud de gestion de groupe (12).

8. - Procédé de gestion de sous-systèmes selon la revendication 6, dans lequel la quatrième étape comprend les étapes consistant à :
dans un cas dans lequel des résultats de mesure de qualité de réseau sont reçus à partir d'une pluralité des noeuds de gestion de groupe (12), comparer des résultats de mesure de la qualité de réseau reçus à partir de la pluralité des noeuds de gestion de groupe (12) les uns aux autres, pour déterminer ainsi s'il existe ou non un résultat de mesure ayant une qualité de réseau similaire ; et
dans un cas dans lequel il existe un résultat de mesure ayant une qualité de réseau similaire, sélectionner nouvellement le noeud de gestion de groupe (12).

9. - Procédé de gestion de sous-systèmes selon la revendication 6, dans lequel chacun du ou des noeuds de gestion de groupe (12) mesure, en tant que qualité de réseau entre le noeud de gestion de groupe (12) respectif et chacun de la pluralité de sous-systèmes (11) autres que le noeud de gestion de groupe (12) respectif, au moins un parmi un temps aller-retour qui est une période de temps allant du moment où un paquet est transmis à chacun de la pluralité de sous-systèmes (11) au moment où une réponse est reçue à partir de chacun de la pluralité de sous-systèmes (11), une fluctuation de la période de temps du temps aller-retour qui est calculée en mesurant le temps aller-retour une pluralité de fois, et un degré de précision de synchronisation temporelle par l'intermédiaire du réseau.

10. - Procédé de gestion de sous-systèmes selon la revendication 6,
dans lequel le noeud de gestion de groupe (12) conserve des informations de gestion de groupe pour gérer l'au moins un sous-système (11) inclus dans le groupe, et
dans lequel le procédé de gestion de sous-systèmes consiste en outre à :
sur la base de l'instruction de construction de groupe reçue, construire, par le noeud de gestion de groupe (12), le groupe et générer les informations de gestion de groupe ;
mesurer périodiquement, par le noeud de gestion de groupe (12), une qualité de réseau de l'au moins un sous-système (11) inclus dans le groupe ;
transmettre, par le noeud de gestion de groupe (12), au module de commande de sous-systèmes (10), un résultat de mesure de la qualité de réseau ; et
modifier, par le module de commande de sous-systèmes (10), la configuration du groupe sur la base du résultat de mesure reçu de la qualité de réseau, dans un cas dans lequel la qualité de réseau ne parvient pas à satisfaire à une condition prédéterminée.
